(19) Europäisches Patentamt
European Patent Office
Office européen des brevets

(11) EP 1 946 496 B1

(12) **FASCICULE DE BREVET EUROPEEN**

(45) Date de publication et mention de la délivrance du brevet:
**11.03.2009 Bulletin 2009/11**

(21) Numéro de dépôt: **06841992.8**

(22) Date de dépôt: **02.11.2006**

(51) Int Cl.:
***H04L 12/28*** *(2006.01)*

(86) Numéro de dépôt international:
**PCT/FR2006/051130**

(87) Numéro de publication internationale:
**WO 2007/051946 (10.05.2007 Gazette 2007/19)**

(54) **PROCEDE ET DISPOSITIF DE RESOLUTION DE CONTENTION DANS UN RESEAU DE TELECOMMUNICATION SANS FIL**

VERFAHREN UND VORRICHTUNG ZUR KONFLIKTAUFLÖSUNG IN EINEM DRAHTLOSEN TELEKOMMUNIKATIONSNETZWERK

METHOD AND DEVICE FOR RESOLVING COLLISION IN A WIRELESS TELECOMMUNICATIONS NETWORK

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **04.11.2005 FR 0511267**

(43) Date de publication de la demande:
**23.07.2008 Bulletin 2008/30**

(73) Titulaire: **France Télécom**
**75015 Paris Cedex 15 (FR)**

(72) Inventeur: **GALTIER, Jérôme**
**F-06000 Nice (FR)**

(74) Mandataire: **Delumeau, François Guy et al**
**Cabinet Beau de Loménie**
**158 Rue de l'Université**
**75340 Paris Cedex 07 (FR)**

(56) Documents cités:
**US-A1- 2004 093 421** **US-A1- 2004 264 423**

- **ZAKHIA G. ABICHAR AND J. MORRIS CHANG: "CONTI: Constant-Time Contention Resolution for WLAN Access" NETWORKING 2005: 4TH INTERNATIONAL IFIP-TC6 NETWORKING CONFERENCE, WATERLOO, CANADA, MAY 2-6, 2005. PROCEEDINGS, [Online] vol. 3462/2005, 6 mai 2005 (2005-05-06), pages 358-369, XP002392550 ISBN: 3-540-25809-4 Extrait de l'Internet: URL:http://www.springerlink.com/media/dlte umlulp4y0qgunm13/contributions/l/p/0/d/lp0 df7lkxhc1t688.pdf> [extrait le 2006-07-28] cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 946 496 B1

## Description

Arrière-plan de l'invention

La présente invention concerne le domaine des réseaux de télécommunication sans fil, en particulier des réseaux locaux sans fil ou WLAN (de l'anglais "Wireless Local Access Network") conformes à la famille de normes IEEE 802.11.

De tels réseaux sont également nommés réseaux Wi-Fi. Ils sont utilisés pour mettre en réseau, dans de nombreuses applications, des stations (par exemple des ordinateurs, des assistants personnels et des périphériques).

La norme 802.11 définit dans le document "IEEE 802.11a-1999, IEEE 802.11b-1999, IEEE-802.11d-2001, Part 11 : wireless LAN medium access control (MAC) and physical layer (PHY) specifications" un procédé de régulation du trafic dans le réseau sans fil. Ce procédé utilise un système de fenêtres de congestion (Congestion Window"CW") pour réguler ce trafic. Selon cette norme, pour déterminer l'instant où émettre un paquet de données, une station tire un nombre aléatoire au hasard entre 0 et CW-1, la valeur CW étant un entier compris entre deux valeurs $CW_{min}$ et $CW_{max}$ spécifiées par la norme 802.11.

Cette valeur CW sert de compteur à rebours pour l'émission du paquet, ce compteur étant différé si la station constate qu'une autre station est en train d'émettre. Malheureusement, ce système à fenêtres de congestion génère un nombre important de collisions sur le réseau sans fil, ce qui se traduit, du point de vue de l'utilisateur, par une perte importante de bande passante.

Le document "Abichar et M. Chang CONTI Constant Time Contention Resolution for WLAN Access" IFIP Networking 2005, ci-après [CONTI] propose un procédé de résolution de contention en temps constant qui utilise une série de tests très courts successifs pour sélectionner la station qui va émettre.

Selon le procédé CONTI, l'élimination des stations désirant émettre est accomplie grâce à l'utilisation d'une variable booléenne appelée "try-bit". Plus précisément, chaque station choisit cette variable aléatoirement et émet un signal sur le réseau si cette valeur aléatoire est égale à 1 ou écoute le réseau dans le cas contraire. Une station se retire du réseau, c'est-à-dire décide de ne pas émettre son paquet de données au cours d'une série de tours de sélection, si la valeur binaire est égale à 0 et qu'elle détecte un signal émis par les autres stations.

Bien que plus performante que la méthode de congestion définie par la norme 802.11, la méthode de résolution de contention proposée par CONTI génère encore un nombre de collisions important dans l'accès au réseau sans fil, de l'ordre de 5%.

Cet inconvénient est dû au fait que la loi de probabilités utilisée pour le tirage de la variable aléatoire try-bit n'est pas optimisée.

Objet et résumé de l'invention

La présente invention vise donc à réduire considérablement les collisions expérimentées par le procédé CONTI, dans une proportion de l'ordre de 15 à 20% en améliorant la loi de probabilités utilisée pour le tirage de la valeur aléatoire binaire précitée.

Plus précisément, l'invention concerne un procédé de résolution de contention apte à être mis en oeuvre dans une station ayant un paquet de données à émettre dans un réseau de télécommunication sans fil, dans lequel le paquet est émis à l'issue d'un nombre maximal prédéterminé de tours de sélection avant l'émission.

Ce procédé comporte, à chacun des tours de sélection, une étape de tirage d'une valeur d'une variable aléatoire binaire représentative d'une autorisation ou d'une interdiction d'émettre le paquet au cours de ce tour.

Conformément à l'invention, la probabilité $p_w$ que ladite variable aléatoire binaire prenne une valeur prédéterminée est ajustée en prenant compte des autorisations et des interdictions d'émettre le paquet obtenues par la station au cours des tours de sélection précédents.

En pratique, ce procédé de résolution est mis en oeuvre simultanément par une pluralité de stations désireuses d'émettre un paquet dans le réseau. Conformément à l'invention, les probabilités précitées sont ajustées par une méthode d'optimisation mathématique prenant en compte le nombre de ces stations, ce qui permet avantageusement de diminuer considérablement le nombre de collisions sur le réseau de télécommunication sans fil par rapport aux procédés de résolution de contention connus de l'art antérieur.

Dans un mode de réalisation, ces probabilités $p_w$ sont obtenues selon la formule suivante :

$$p_w = \frac{z_{\#(w)2^{k\,max-l(w)}+2^{k\,max-l(w)-1}} - z_{\#(w)2^{k\,max-l(w)}+2^{k\,max-l(w)}}}{z_{\#(w)2^{k\,max-l(w)}} - z_{\#(w)2^{k\,max-l(w)}+2^{k\,max-l(w)}}}$$

où :

- w représente un mot binaire (r(1), ..., r(k-1)) de valeur numérique binaire #(w) et dans lequel la valeur binaire d'un rang (i) est égale à ladite valeur de la variable aléatoire binaire (r(i)) tirée au tour (i) de sélection correspondant à ce rang, l(w) étant la longueur du mot w;
  les valeurs $z_i$ étant choisies telles que :

- $z_0 = 0$ ; $z_m = 1$ ; $0<z_i<z_{i+1}<1$, pour $1 \leq i \leq m-2$, où $m = 2^{kmax}$, kmax étant ledit nombre de tours de sélection , et telles qu'il existe une fonction h, dite « fonction de densités », positive et normée entre 0 et 1 et telle que :

$$\int_{zi}^{zi+1} h(t)dt = \frac{1}{m} \int_{0}^{1} h(t)dt$$

Cette méthode permet d'obtenir un nombre de collisions fortement réduit par rapport à la méthode CONTI de l'art antérieur, comme illustré ultérieurement en référence à la figure 7.

Dans un mode de réalisation, le procédé de résolution selon l'invention comporte une étape de définition d'un scénario consistant à fixer les probabilités avec lesquelles un nombre de stations souhaitent émettre un paquet au cours d'un même tour de sélection, ces stations étant dites « éligibles » et la valeur de la fonction de densités au voisinage de 1 est d'autant plus grande que ces probabilités sont non négligeables pour des valeurs importantes de ce nombre.

Dans un mode de réalisation, on définit une fonction f caractéristique de la distribution du nombre des stations éligibles et on définit la fonction h de densité précitée de sorte qu'elle croît avec l'inflexion de cette fonction caractéristique.

La **figure 1** qui représente la dérivée f' de la fonction caractéristique f dans l'intervalle [0, 1] permet de justifier ce choix. On peut en effet démontrer que le taux de collision correspond à l'aire grisée définie entre la représentation graphique de la courbe de f' et son approximation par une intégrale de Riemann.

En conséquence, chercher à minimiser le taux de collisions revient à minimiser cette aire, à savoir déterminer, pour un nombre de paliers de Riemann déterminé, la position de ces paliers de Riemann (à savoir les $z_i$) qui définissent la meilleure approximation de f'.

Du fait de l'allure de la représentation de la fonction f', il est donc préférable de choisir des points $z_i$ de l'intervalle [0, 1] concentrés dans le voisinage de 1. Ce qui revient exactement à choisir une fonction h croissante avec l'inflexion de la fonction caractéristique f, en respectant la contrainte de normalisation suivante :

$$\int_{0}^{1} h(t)dt = 1$$

On peut définir la fonction de densité h par escaliers à partir des $z_i$ de la façon suivante :

$$h(x) = \frac{1}{m(z_{i+1} - z_i)}, \text{ pour } z_i \leq x < z_{i+1}$$

Dans ces conditions, minimiser le taux de collision revient à minimiser l'intégrale entre 0 et 1 de la fonction qui à x, associe f''(x)/h(x), où f'' représente la dérivée seconde de la fonction caractéristique f.

Préférentiellement, la fonction h de densité est définie par

$$h(x) = \sqrt{f''(x)} * \frac{1}{\int_{0}^{1} \sqrt{f''(t)dt}},$$

cette fonction étant celle qui minimiserait l'intégrale précitée si h était une fonction continue et non pas définie en escaliers.

Dans un mode de réalisation, pour obtenir les valeurs $z_j$ :

- on définit une fonction H de la façon suivante :

$$\begin{cases} H(0) = 0 \\ H(i+1) = H(i) + h\left(\frac{i+1/2}{M}\right) \end{cases},$$

où M est un nombre très supérieur à m et on définit $z_j$ pour, $0 \leq j \leq m$ par

$$\begin{cases} z_0 = 0 \\ z_j = \frac{1}{M} \min\left\{ i / \frac{H(i)}{H(M-1)} \geq \frac{j}{m} \right\} \\ z_m = 1 \end{cases}$$

Ce choix de valeurs $z_i$ permet d'approcher au maximum la fonction h en escalier définie précédemment.

Dans un mode de réalisation, au cours de l'étape de définition de scénario, on fixe les probabilités $k_n$ avec lesquelles un nombre n de stations souhaitent émettre un paquet au cours d'un même tour de sélection de la façon suivante :

$$k_n = 1/S$$

pour $1 \leq n \leq S$; et

$$k_n = 0$$

pour n>S,

pour n>S, où S est le nombre prévu de stations dans le réseau.

Cette caractéristique permet avantageusement de dimensionner le procédé de résolution de contention pour un nombre de stations données.

Le nombre S sera par exemple choisi égal à 100.

Dans un mode de réalisation, les différentes étapes du procédé de résolution de contention sont déterminées par des instructions de programmes d'ordinateurs.

En conséquence, l'invention vise aussi un programme d'ordinateur sur un support d'informations, ce programme étant susceptible d'être mis en oeuvre dans une station ou plus généralement dans un ordinateur, ce programme comportant des instructions adaptées à la mise en oeuvre des étapes d'un procédé de résolution tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé,

le circuit étant adapté pour exécuter ou pour être utilisé dans l'exécution du procédé en question.

Corrélativement, l'invention concerne un dispositif de résolution de contention pouvant être incorporé dans une station ayant un paquet de données à émettre dans un réseau de télécommunication sans fil. Ce dispositif comporte :

- des moyens d'émission dudit paquet à l'issue d'un nombre maximal prédéterminé de tours de sélection avant l'émission ; et
- des moyens adaptés à tirer, à chacun des tours de sélection, une valeur d'une variable aléatoire binaire représentative d'une autorisation ou d'une interdiction d'émettre ledit paquet au cours de ce tour.

Conformément à l'invention, la probabilité $p_w$ que ladite variable aléatoire binaire prenne une valeur prédéterminée est ajustée en prenant compte des autorisations et des interdictions d'émettre le paquet obtenues par la station au cours des tours de sélection précédents.

Ces probabilités $p_w$ sont mémorisées dans une table accessible par dispositif selon l'invention, et préalablement obtenues par la formule suivante :

$$p_w = \frac{z_{\#(w)2^{k\max - l(w)} + 2^{k\max - l(w) - 1}} - z_{\#(w)2^{k\max - l(w)} + 2^{k\max - l(w)}}}{z_{\#(w)2^{k\max - l(w)}} - z_{\#(w)2^{k\max - l(w)} + 2^{k\max - l(w)}}}$$

où :

- w représente un mot binaire (r(1), ..., r(k-1)) de valeur numérique binaire #(w) et dans lequel la valeur binaire d'un rang (i) est égale à ladite valeur de la variable aléatoire binaire (r(i)) tirée au tour (i) de sélection correspondant à ce rang ;

les valeurs $z_i$ étant choisies telles que :

- $z_0 = 0$ ; $z_m = 1$ ; $0<z_i<z_{i+1}<1$, pour $1 \leq i \leq m-2$, où $m = 2^{kmax}$, kmax étant ledit nombre de tours de sélection , et telles qu'il exsite une fonction h, dite « fonction de densités », positive et normée entre 0 et 1 et telle que :

$$\int_{zi}^{zi+1} h(t)dt = \frac{1}{m}\int_0^1 h(t)dt$$

Les avantages et caractéristiques additionnels du dispositif de résolution selon l'invention sont similaires à celles du procédé de résolution mentionné ci-dessus et ne seront par rappelés ici.

<u>Brève description des dessins</u>

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1, déjà décrite, représente la dérivée de la fonction caractéristique f dans l'intervalle [0, 1] ;
- la figure 2 représente un réseau de télécommunication sans fil avec des stations conformes à l'invention dans un mode préféré de réalisation ;
- la figure 3 représente un dispositif de résolution de contention conforme à l'invention dans un mode préféré de réalisation ;
- la figure 4 représente, sous forme d'organigramme, les principales étapes d'un procédé permettant d'obtenir une table de probabilités conformément à l'invention dans un mode préféré de réalisation ;
- la figure 5 représente, sous forme d'organigramme, les principales étapes d'un procédé de résolution de contention conforme à l'invention dans un mode préféré de réalisation ;
- la figure 6, représente un arbre de probabilités obtenus par un procédé de résolution de contention conforme à l'invention ; et
- la figure 7 permet de comparer le taux de collisions obtenu par le procédé de résolution selon l'invention avec celui obtenu par le procédé CONTI de l'art antérieur.

La **figure 2** représente un réseau 1 de télécommunication sans fil dans lequel évoluent des stations 10, 10', 10" conformes à l'invention.

Chacune de ces stations 10 comporte un dispositif de résolution de contention conforme à l'invention et qui va maintenant être décrit en référence à la **figure 3.**

Dans le mode préféré de réalisation décrit ici, le dispositif 100 de résolution de contention comporte un processeur 110, une mémoire vive 120, une mémoire morte de type ROM 130, des moyens 140 pour émettre et recevoir des paquets et des signaux dans le réseau de télécommunication sans fil 1 et une table de probabilités 150.

Ces différents éléments sont reliés entre eux par un système de bus non référencé.

Les moyens 140 pour envoyer et recevoir des paquets de données et des signaux sur le réseau de télécommunication sans fil 1 sont, dans l'exemple décrit ici, constitués par une carte conforme à la famille de normes IEEE 802.11.

Nous allons maintenant décrire en référence à la **figure 4** un procédé pour obtenir la table de probabilités 150.

Au cours d'une première étape E10, on définit un scénario consistant à fixer lés probabilités $k_n$ avec lesquelles un nombre n de stations souhaitent émettre un paquet au cours d'un même tour de sélection.

Dans le mode préféré de réalisation décrit ici, ces probabilités $k_n$ sont définies de la façon suivante :

$$k_n = 1/S$$

pour 1 ≤n≤S; et

$$k_n=0$$

pour n>S, où S est le nombre prévu de stations dans le réseau.

Le nombre S peut par exemple être choisi égal à 100.

Au cours d'une étape E20, on définit une fonction h appelée fonction de densité positive et croissante entre 0 et 1.

Dans le mode préféré de réalisation décrit ici, cette fonction de densité h est définie par $h(x) = \sqrt{f''(x)}$,, où f" représente la dérivée seconde d'une fonction caractéristique f de la distribution du nombre des stations éligibles précitées.

Cette fonction f peut être choisie de la forme :

$$f(x) = \sum_{n \geq 1} k_n x^n \text{ .}$$

Puis, au cours d'une étape E30, on calcule un arbre de probabilités de la façon suivante :

Tout d'abord, on définit une fonction H de la façon suivante :

$$\begin{cases} H(0) = 0 \\ H(i+1) = H(i) + h\left(\dfrac{i+1/2}{M}\right) \end{cases},$$

où M est un nombre très supérieur à m et on définit $z_j$ pour, 0≤j≤m par

$$\begin{cases} z_0 = 0 \\ z_j = \dfrac{1}{M}\min\left\{ i / \dfrac{H(i)}{H(M-1)} \geq \dfrac{j}{m} \right\} \\ z_m = 1 \end{cases}$$

Il est possible de vérifier que la suite des $z_i$ ainsi définie est telle que

$$\int_{z_i}^{z_{i+1}} h(t)dt = \frac{1}{m}\int_{0}^{1} h(t)dt\ .$$

Puis, on calcule les probabilités $p_w$ selon la formule suivante :

$$p_w = \frac{z_{\#(w)2^{k\max - l(w)} + 2^{k\max - l(w) - 1}} - z_{\#(w)2^{k\max - l(w)} + 2^{k\max - l(w)}}}{z_{\#(w)2^{k\max - l(w)}} - z_{\#(w)2^{k\max - l(w)} + 2^{k\max - l(w)}}}$$

où :

- w est un mot dans l'alphabet {0,1} dans lequel un « 1 » au rang i, respectivement un « 0 » au rang i, est représentatif du fait que ladite station a émis, respectivement pas émis, ledit signal au tour de sélection i ;
- #(w) représente la valeur numérique représentée par w ; et
- l(w) représente la longueur du mot w.

Le Tableau 1 ci-dessous représente les probabilités obtenues conformément à ce mode de réalisation de l'invention.

Tableau 1

| | | | | | | | | | |
|---|---|---|---|---|---|---|---|---|---|
| **p** | 0.08 | $p_{1111}$ | 0.49 | $p_{0000}$ | 0.42 | $p_{10001}$ | 0.48 | $p_{00010}$ | 0.47 |
| $p_1$ | 0.34 | $p_{1110}$ | 0.48 | $p_{11111}$ | 0.49 | $p_{10000}$ | 0.48 | $p_{00001}$ | 0.46 |
| $p_0$ | 0.17 | $p_{1101}$ | 0.49 | $p_{11110}$ | 0.49 | $p_{01111}$ | 0.48 | $p_{00000}$ | 0.46 |
| $p_{11}$ | 0.44 | $p_{1100}$ | 0.48 | $p_{11101}$ | 0.49 | $p_{01110}$ | 0.48 | | |
| $p_{10}$ | 0.40 | $p_{1011}$ | 0.48 | $p_{11100}$ | 0.50 | $p_{01101}$ | 0.48 | | |
| $p_{01}$ | 0.34 | $p_{1010}$ | 0.48 | $p_{11011}$ | 0.49 | $p_{01100}$ | 0.48 | | |
| $p_{00}$ | 0.28 | $p_{1001}$ | 0.47 | $p_{11010}$ | 0.49 | $p_{01011}$ | 0.48 | | |
| $p_{111}$ | 0.47 | $p_{1000}$ | 0.47 | $p_{11001}$ | 0.49 | $p_{01010}$ | 0.48 | | |
| $p_{110}$ | 0.47 | $p_{0111}$ | 0.46 | $p_{11000}$ | 0.49 | $p_{01001}$ | 0.48 | | |
| $p_{101}$ | 0.46 | $p_{0110}$ | 0.46 | $p_{10111}$ | 0.49 | $p_{01000}$ | 0.48 | | |
| $p_{100}$ | 0.44 | $p_{0101}$ | 0.46 | $p_{10110}$ | 0.49 | $p_{00111}$ | 0.48 | | |
| $p_{011}$ | 0.43 | $p_{0100}$ | 0.46 | $p_{10101}$ | 0.49 | $p_{00110}$ | 0.48 | | |
| $p_{010}$ | 0.42 | $p_{0011}$ | 0.46 | $p_{10100}$ | 0.49 | $p_{00101}$ | 0.48 | | |
| $p_{001}$ | 0.41 | $p_{0010}$ | 0.45 | $p_{10011}$ | 0.49 | $p_{00100}$ | 0.47 | | |
| $p_{000}$ | 0.36 | $p_{0001}$ | 0.44 | $p_{10010}$ | 0.49 | $p_{00011}$ | 0.47 | | |

Ce tableau est représenté, pour les 3 premiers tours de sélection, sous forme d'arbre à la **figure 6**. Ce tableau doit être lu de la façon suivante :

- la première probabilité p représente la probabilité qu'une station émette au premier tour de sélection ; cette probabilité est la même pour toutes les stations ;
- la probabilité $p_1$ représente la probabilité de tirage de la valeur « 1 » pour la variable aléatoire binaire r(k) au deuxième tour de sélection, sachant qu'une valeur « 1 » a été tirée au premier tour de sélection ;
- la probabilité $p_0$ représente la probabilité de tirage de la valeur « 1 » pour la variable aléatoire binaire r(k) au deuxième

tour de sélection, sachant qu'une valeur « 0 » a été tirée au premier tour de sélection ; et

- la probabilité $p_w$ représente la probabilité de tirage de la valeur « 1 » pour la variable aléatoire binaire r(k) au $k^{ième}$ tour de sélection, sachant que les valeurs r(1)r(2)r(k-1), définissant l'indice w, ont été tirées au(x) tour(s) de sélection précédents.

Ce tableau 1 est mémorisé dans la table 150 du dispositif 100 de résolution de contention conforme à l'invention.

Nous allons maintenant décrire en référence à la figure 5 les principales étapes d'un procédé de résolution de contention conforme à l'invention. Nous supposerons que ce procédé est mis en oeuvre par la station 10, cette station souhaitant émettre un paquet de données dans le réseau 1.

Au cours d'une première étape F10, on initialise une variable k à 1, cette variable représentant le tour de sélection en cours.

Cette étape F10 d'initialisation est suivie par une étape F20 de tirage d'une valeur d'une variable aléatoire binaire r(k).

Conformément à l'invention, la probabilité pour que cette valeur variable aléatoire binaire r(k) prenne, au tour k, la valeur prédéterminée « 1 » est égale à la probabilité p[r(1),r(2),...r(k-1)] lue dans la table 150.

Cette étape F20 de tirage d'une valeur de variable aléatoire est suivie par une étape F30 au cours de laquelle on vérifie si la valeur binaire r(k) tirée est égale à 0.

Si tel est le cas, ce test F30 est suivi par une étape F40 au cours de laquelle la station 10 écoute le réseau de télécommunication sans fil pour déterminer si une autre station 10', 10" a émis un signal représentatif du fait que cette autre station 10', 10" désire émettre un paquet de données.

Si ce signal est détecté (résultat du test F50 positif), le procédé de résolution de contention se termine, au cours d'une étape F60, sans que la station 10 ait émis son paquet de données. Au cours de cette étape F60, la station 10 attend la fin des tours de sélection et l'émission d'un paquet par une autre station 10', 10" avant de retourner à l'étape F10 d'initialisation déjà décrite.

En revanche, si le signal n'est pas détecté (résultat du test F50 négatif), ce test est suivi par un test F80 au cours duquel on détermine si le tour k est le dernier tour de sélection, ce qui revient à vérifier si la variable k est égale à kmax.

Si tel est le cas, la station 100 émet son paquet de données au cours d'une étape F100.

En revanche, si k est strictement inférieur à kmax, le résultat du test F80 est négatif. Ce test est alors suivi par une étape F90 au cours de laquelle on incrémente la variable k d'une unité.

Cette étape F90 d'incrémentation est suivie par l'étape F20 de tirage d'une valeur d'une variable aléatoire binaire r(k), déjà décrite, pour le tour de sélection suivant.

Si au cours du test F30, il est déterminé que la valeur binaire tirée est égale à la valeur prédéterminée 1, ce test F30 est suivi par une étape F70 d'émission d'un signal représentatif du fait que la station 100 désire émettre un paquet de données sur le réseau.

Cette étape F70 d'émission d'un signal est suivie par le test F80 déjà décrit au cours duquel on vérifie si le tour de sélection courant k est le dernier tour de sélection.

Si tel est le cas, ce test F80 est suivi par l'étape F100 d'émission du paquet de données par la station 10.

En revanche, si tel n'est pas le cas, ce test F80 est suivi par l'étape F90 d'incrémentation déjà décrite.

A titre d'exemple, nous donnons au tableau 2, en utilisant les notations de l'invention, les probabilités d'émettre un paquet de données selon la méthode CONTI de l'art antérieur.

Tableau 2

| | | | | | | | | | |
|---|---|---|---|---|---|---|---|---|---|
| **p** | 0.07 | $p_{1111}$ | 0.4 | $p_{0000}$ | 0.4 | $p_{10001}$ | 0.5 | $p_{00010}$ | 0.5 |
| $p_1$ | 0.2 | $p_{1110}$ | 0.4 | $p_{11111}$ | 0.5 | $p_{10000}$ | 0.5 | $p_{00001}$ | 0.5 |
| $p_0$ | 0.2 | $p_{1101}$ | 0.4 | $p_{11110}$ | 0.5 | $p_{01111}$ | 0.5 | pooooo | 0.5 |
| $p_{11}$ | 0.25 | $p_{1100}$ | 0.4 | $p_{11101}$ | 0.5 | $p_{01110}$ | 0.5 | | |
| $p_{10}$ | 0.25 | $p_{1011}$ | 0.4 | $p_{11100}$ | 0.5 | $p_{01101}$ | 0.5 | | |
| $p_{01}$ | 0.25 | $p_{1010}$ | 0.4 | $p_{11011}$ | 0.5 | $p_{01100}$ | 0.5 | | |
| $p_{00}$ | 0.25 | $p_{1001}$ | 0.4 | $p_{11010}$ | 0.5 | $p_{01011}$ | 0.5 | | |
| $p_{111}$ | 0.33 | $p_{1000}$ | 0.4 | $p_{11001}$ | 0.5 | $p_{01010}$ | 0.5 | | |
| $p_{110}$ | 0.33 | $p_{0111}$ | 0.4 | $p_{11000}$ | 0.5 | $p_{01001}$ | 0.5 | | |
| $p_{101}$ | 0.33 | $p_{0110}$ | 0.4 | $p_{10111}$ | 0.5 | $p_{01000}$ | 0.5 | | |

(suite)

| | | | | | | | | | |
|---|---|---|---|---|---|---|---|---|---|
| $p_{100}$ | 0.33 | $p_{0101}$ | 0.4 | $p_{10110}$ | 0.5 | $p_{00111}$ | 0.5 | | |
| $p_{011}$ | 0.33 | $p_{0100}$ | 0.4 | $p_{10101}$ | 0.5 | $p_{00110}$ | 0.5 | | |
| $p_{010}$ | 0.33 | $p_{0011}$ | 0.4 | $p_{10100}$ | 0.5 | $p_{00101}$ | 0.5 | | |
| $p_{001}$ | 0.33 | $p_{0010}$ | 0.4 | $p_{10011}$ | 0.5 | $p_{00100}$ | 0.5 | | |
| $p_{000}$ | 0.33 | $p_{0001}$ | 0.4 | $p_{10010}$ | 0.5 | $p_{00011}$ | 0.5 | | |

Au premier tour de sélection, on utilise la probabilité p, au deuxième tour la probabilité p[r(1)], puis au troisième tour p[r(1), r(2)] et ainsi de suite. On comprend donc qu'à chaque tour de sélection l'indice de la probabilité utilisée contient autant de caractères qu'il s'est écoulé de tours. On remarque dans le tableau que selon [CONTI], et contrairement à l'invention, les probabilités pour un tour de sélection donné (c'est-à-dire pour deux indices qui ont le même nombre de caractères) sont identiques, et donc indépendantes de la station et des valeurs tirées pour cette station lors des tours de sélection précédents.

La **figure 7** permet de comparer le taux de collisions obtenu par le procédé de résolution selon l'invention avec celui obtenu par le procédé CONTI de l'art antérieur, en fonction du nombre de stations.

On remarque que le taux de collision obtenu par la méthode de résolution selon l'invention (3.5%-5.1%) est inférieur à celui obtenu par la méthode CONTI (4,37%-6,37%).

Les procédé et dispositif de résolution de contention selon l'invention permettent donc de diminuer le taux de collisions sur le réseau de télécommunication sans fil.

## Revendications

1. Procédé de résolution de contention apte à être mis en oeuvre dans une station ayant un paquet de données à émettre dans un réseau de télécommunication sans fil, dans lequel il est déterminé à l'issue d'un nombre maximal (kmax) prédéterminé de tours de sélection si ladite station est autorisée à émettre ledit paquet, ledit procédé comportant, à chacun desdits tours (k), une étape (F20) de tirage d'une valeur d'une variable aléatoire binaire (r(k)) représentative d'une autorisation ou d'une interdiction d'émettre ledit paquet au cours dudit tour (k), ce procédé étant **caractérisé en ce que** la probabilité ($p_w$) que ladite valeur variable aléatoire binaire (r(k)) prenne une valeur prédéterminée est ajustée en prenant compte des autorisations et des interdictions d'émettre ledit paquet obtenues par ladite station au cours des tours (1, ..., k-1) de sélection précédents.

2. Procédé de résolution de contention selon la revendication 1, **caractérisé en ce que** ladite probabilité ($p_w$) est obtenue selon la formule suivante :

$$p_w = \frac{z_{\#(w)2^{k\max - l(w)} + 2^{k\max - l(w) - 1}} - z_{\#(w)2^{k\max - l(w)} + 2^{k\max - l(w)}}}{z_{\#(w)2^{k\max - l(w)}} - z_{\#(w)2^{k\max - l(w)} + 2^{k\max - l(w)}}}$$

où :

- w représente un mot binaire (r(1), ..., r(k-1)) de valeur numérique binaire #(w) et dans lequel la valeur binaire d'un rang (i) est égale à ladite valeur de la variable aléatoire binaire (r(i)) tirée au tour (i) de sélection correspondant à ce rang, l(w) étant la longueur du mot w;

les valeurs $z_i$ étant choisies telles que :

- $z_0 = 0$ ; $z_m = 1$ ; $0<z_i<z_{i+1}<1$, pour $1 \leq i \leq m-2$, où $m = 2^{kmax}$, kmax étant ledit nombre de tours de sélection , et telles qu'il existe une fonction h, dite « fonction de densités », positive et normée entre 0 et 1 et telle que :

$$\int_{z_i}^{z_{i+1}} h(t)dt = \frac{1}{m}\int_0^1 h(t)dt$$

**3.** Procédé de résolution selon la revendication 1 ou 3, **caractérisé en ce qu'**il comporte une étape (E10) de définition d'un scénario consistant à fixer les probabilités ($k_n$) avec lesquelles un nombre (n) de stations souhaitent émettre un paquet au cours d'un même tour de sélection, lesdites stations étant dites « éligibles » et **en ce que** la valeur de ladite fonction (h) de densités dépend desdites probabilités ($k_n$).

**4.** Procédé de résolution selon la revendication 3, **caractérisé en ce que** la valeur de ladite fonction (h) de densités au voisinage de 1 est d'autant plus grande que lesdites probabilités ($k_n$) sont non négligeables pour des valeurs importantes dudit nombre (n).

**5.** Procédé de résolution selon la revendication 4, **caractérisé en ce que :**

- on définit une fonction (f) caractéristique de la distribution du nombre desdites stations éligibles ;
- on définit ladite fonction (h) de densités de sorte qu'elle croît avec l'inflexion de ladite fonction caractéristique (f).

**6.** Procédé de résolution selon la revendication 5, **caractérisé en ce que** ladite fonction (h) de densités, est définie par :

$$h(x) = \sqrt{f''(x)} * \frac{1}{\int_0^1 \sqrt{f''(t)dt}},$$

où f" représente la dérivée seconde de ladite fonction caractéristique (f).

**7.** Procédé de résolution selon l'une quelconque des revendications 3 à 6, **caractérisé en ce que**, au cours de ladite étape (E10) de définition de scénario, on fixe lesdites probabilités ($k_n$) avec lesquelles un nombre (n) de stations souhaitent émettre un paquet au cours d'un même tour de sélection de la façon suivante :

$$k_n = 1/S \quad \text{pour } 1 \leq n \leq S \, ;$$

et
$k_n$=0 pour n>S, où S est le nombre prévu de stations dans ledit réseau.

**8.** Procédé de résolution selon l'une quelconque des revendications 1 à 7, **caractérisé en ce que,** pour obtenir lesdites valeurs $z_j$ :

- on définit une fonction H de la façon suivante :

$$\begin{cases} H(0) = 0 \\ H(i+1) = H(i) + h\left(\frac{i+1/2}{M}\right) \end{cases},$$

où M est un nombre très supérieur à m
et on définit $z_j$ pour, 0≤j≤m par

$$\begin{cases} z_0 = 0 \\ z_j = \dfrac{1}{M}\min\left\{ i / \dfrac{H(i)}{H(M-1)} \geq \dfrac{j}{m} \right\} \\ z_m = 1 \end{cases}$$

**9.** Procédé de résolution selon l'une quelconque des revendications 1 à 8, **caractérisé en ce qu'**il comporte, à chacun desdits tours (k) de sélection :

- si ladite valeur binaire tirée (r(k)) est égale à une première valeur prédéterminée (1) représentative d'une autorisation à émettre, une étape (F70) d'émission d'un signal représentatif du fait que ladite station désire émettre un paquet de données ; ou
- si ladite valeur binaire tirée (r(k)) est égale à une seconde valeur prédéterminée (0) représentative d'une interdiction d'émettre, une étape (F40) d'écoute dudit réseau, pour déterminer si une autre station (10', 10") a émis ledit signal, et le cas échéant une étape (F60) d'abandon dudit procédé de résolution sans effectuer ladite émission de paquet.

**10.** Dispositif de résolution de contention pouvant être incorporé dans une station (10) ayant un paquet de données à émettre dans un réseau de télécommunication sans fil, ledit dispositif comportant :

- des moyens (110) pour déterminer à l'issue d'un nombre maximal (kmax) prédéterminé de tours de sélection si ladite station est autorisée à émettre ledit paquet ;
- des moyens (110) adaptés à tirer, à chacun desdits tours (k), une valeur d'une variable aléatoire binaire (r(k)) représentative d'une autorisation ou d'une interdiction d'émettre ledit paquet au cours dudit tour (k) ;

ledit dispositif (100) étant **caractérisé en ce que** les moyens (110) adaptés à tirer sont adaptés à ce que la probabilité ($p_w$) que ladite variable aléatoire binaire (r(k)) prenne une valeur prédéterminée est ajustée en prenant compte des autorisations et des interdictions d'émettre ledit paquet obtenues par ladite station au cours des tours (1, ..., k-1) de sélection précédents, ces probabilités ($p_w$) étant mémorisées dans une table (150) accessible par ledit dispositif.

**11.** Station (10, 10', 10") comportant un dispositif (100) de résolution selon la revendication 10.

**12.** Programme d'ordinateur comportant des instructions pour l'exécution des étapes du procédé de résolution selon l'une quelconque des revendications 1 à 9 lorsque ledit programme est exécuté par un ordinateur.

**13.** Support d'enregistrement lisible par un ordinateur sur lequel est enregistré un programme d'ordinateur comprenant des instructions pour l'exécution des étapes du procédé de résolution selon l'une quelconque des revendications 1 à 9.

## Claims

**1.** Contention resolution method capable of being implemented in a station having a data packet to be transmitted in a wireless telecommunications network, in which it is determined on completion of at least one selection turn whether said station is authorized to transmit said packet, wherein the number of selection turns is lower than or equal to a predetermined maximum number (kmax),
said method comprising, at each of said turns (k), a step (F20) of drawing a value of a random binary variable (r(k)) representing an authorization or a prohibition to transmit said packet in the course of said turn (k),
said method being **characterized in that** the probability ($p_w$) that said random binary variable value (r(k)) takes a predetermined value is adjusted by taking account of the authorizations and prohibitions to transmit said packet which are obtained by said station in the course of the preceding selection turns (1, ..., k-1).

**2.** Contention resolution method according to Claim 1, **characterized in that** said probability ($p_w$) is obtained according to the following formula:

$$p_w = \frac{z_{\#(w)2^{k\max - l(w)} + 2^{k\max - l(w) - 1}} - z_{\#(w)2^{k\max - l(w)} + 2^{k\max - l(w)}}}{z_{\#(w)2^{k\max - l(w)}} - z_{\#(w)2^{k\max - l(w)} + 2^{k\max - l(w)}}}$$

where:

- w represents a binary word (r(1), ..., r(k-1)) of binary numeric value #(w) and in which the binary value of one digit place (i) is equal to said random binary variable value (r(i)) drawn at the selection turn (i) corresponding to this digit place, l(w) being the length of the word w;

the values $z_i$ being chosen such that:

- $z_0=0$; $z_m=1$; $0<z_i<z_{i+1}<1$, for $1 \leq i \leq m-2$, where $m=2^{kmax}$, kmax being said number of selection turns, and such that there exists a function h, called the "density function", that is positive and normalized between 0 and 1, such that:

$$\int_{zi}^{zi+1} h(t)dt = \frac{1}{m} \int_0^1 h(t)dt$$

3. Resolution method according to Claim 1 or 2, **characterized in that** it comprises a step (E10) of defining a scenario consisting in fixing the probabilities ($k_n$) with which a number (n) of stations hope to transmit a packet in the course of the same selection turn, said stations being called "eligible" and **in that** the value of said density function (h) depends on said probabilities ($k_n$).

4. Resolution method according to Claim 3, **characterized in that** the less negligible said probabilities ($k_n$) are for large values of said number (n), the greater the value of said density function (h) in the vicinity of 1.

5. Resolution method according to Claim 4, **characterized in that:**

- a characteristic function (f) is defined for the distribution of the number of said eligible stations; and
- said density function (h) is defined so that it grows with the inflexion of said characteristic function (f).

6. Resolution method according to Claim 5,
**characterized in that** said density function (h) is defined by:

$$h(x) = \sqrt{f''(x)} * \frac{1}{\int_0^1 \sqrt{f''(t)dt}},$$

where f'' represents the second derivative of said characteristic function (f).

7. Resolution method according to any one of Claims 3 to 6, **characterized in that** in the course of said scenario definition step (E10), said probabilities ($k_n$) with which a number (n) of stations hope to transmit a packet in the course of the same selection turn are set in the following manner:

$$k_n=1/S$$

for $1 \leq n \leq S$; and

$$k_n=0$$

for n>S, where S is the foreseen number of stations in said network.

**8.** Resolution method according to any one of Claims 1 to 7, **characterized in that,** in order to obtain said values $z_j$,

- a function H is defined in the following manner:

$$\begin{cases} H(0)=0 \\ H(i+1)=H(i)+h\left(\frac{i+1/2}{M}\right) \end{cases},$$

where M is a number much greater than m, and $z_j$ is defined for $0 \le j \le m$ by:

$$\begin{cases} z_0 = 0 \\ z_j = \frac{1}{M}\min\left\{ i / \frac{H(i)}{H(M-1)} \geq \frac{j}{m} \right\} \\ z_m = 1 \end{cases}$$

**9.** Resolution method according to any one of Claims 1 to 8, **characterized in that** it comprises, at each of said selection turns (k):

- if said drawn binary value (r(k)) is equal to a first predetermined value (1) representing an authorization to transmit, a step (F70) of transmitting a signal representing the fact that said station wishes to transmit a data packet; or
- if said drawn binary value (r(k)) is equal to a second predetermined value (0) representing a prohibition to transmit, a step (F40) of listening to said network, in order to determine whether another station (10', 10'') has transmitted said signal, and, where necessary, a step (F60) of abandoning said resolution method without carrying out said packet transmission.

**10.** Contention resolution device capable of being incorporated in a station (10) having a data packet to be transmitted in a wireless telecommunications network, said device comprising:

- means (110) for determining on completion of at least one selection turn whether said station is authorized to transmit said packet, wherein the number of selection turns is lower than or equal to a predetermined maximum number (kmax),;
- means (110) suitable for drawing, at each of said turns (k), a value of a random binary variable (r(k)) representing an authorization or a prohibition to transmit said packet in the course of said turn (k); said device (100) being **characterized in that** the means (110) suitable for drawing are suitable **in that** the probability ($p_w$) that said random binary variable (r(k)) takes a predetermined value is adjusted by taking account of the authorizations and prohibitions to transmit said packet which are obtained by said station in the course of the preceding selection turns (1, ..., k-1), these probabilities ($p_w$) being stored in a table (150) accessible by said device.

**11.** Station (10, 10', 10'') comprising a resolution device (100) according to Claim 10.

**12.** Computer program comprising instructions for the execution of the steps of the resolution method according to any one of Claims 1 to 9 when said program is executed by a computer.

**13.** Recording medium that can be read by a computer on which a computer program comprising instructions for executing

steps of the resolution method according to any one of Claims 1 to 9 is recorded.

**Patentansprüche**

1. Verfahren zur Konfliktauflösung, das in einer Station eingesetzt werden kann, die ein Datenpaket hat, welches in einem drahtlosen Telekommunikationsnetzwerk gesendet werden soll, bei dem nach mindestens einem Auswahlgang bestimmt wird, ob die Station autorisiert ist, das Paket zu senden, wobei die Anzahl von Gängen geringer als eine oder gleich einer vorbestimmten maximalen Anzahl ist, wobei das Verfahren bei jedem Auswahlgang (k) einen Schritt (F20) der Ziehung eines Werts einer binären Zufallsvariablen (r(k)) enthält, die für eine Autorisierung oder ein Verbot des Sendens des Pakets während des Gangs (k) repräsentativ ist, wobei dieses Verfahren **dadurch gekennzeichnet ist, dass** die Wahrscheinlichkeit ($p_w$), dass die binäre Zufallsvariable (r(k)) einen vorbestimmten Wert annimmt, angepasst wird, indem Autorisierungen und Verbote, das Paket zu senden, berücksichtigt werden, die von der Station während der vorhergehenden Auswahlgänge (1, ..., k-1) erhalten wurden.

2. Konfliktauflösungsverfahren nach Anspruch 1,
**dadurch gekennzeichnet, dass** die Wahrscheinlichkeit ($p_w$) gemäß der folgenden Formel erhalten wird:

$$p_w = \frac{z_{\#(w)2^{k\max - l(w)} + 2^{k\max - l(w) - 1}} - z_{\#(w)2^{k\max - l(w)} + 2^{k\max - l(w)}}}{z_{\#(w)2^{k\max - l(w)}} - z_{\#(w)2^{k\max - l(w)} + 2^{k\max - l(w)}}}$$

in der:

- w ein Binärwort (r(1), ..., r(k-1)) mit einem binären Zahlenwert #(w) darstellt, und in der der Binärwert eines Rangs (i) gleich dem Wert der binären Zufallsvariablen (r(i)) ist, die in dem diesem Rang entsprechenden Auswahlgang (i) gezogen wird, wobei l(w) die Länge des Worts w ist;

wobei die Werte $z_i$ so gewählt werden, dass gilt:

- $z_0 = 0$; $z_m = 1$; $0<z_i<z_{i+1}<1$, für $1 \leq i \leq m-2$, wobei $m = 2^{kmax}$ gilt, wobei kmax die Anzahl von Auswahlgängen ist, und so, dass es eine Funktion h, "Dichte-Funktion" genannt, gibt, die positiv und zwischen 0 und 1 normiert und derart ist, dass gilt:

$$\int_{zi}^{zi+1} h(t)dt = \frac{1}{m}\int_{0}^{1} h(t)dt$$

3. Auflösungsverfahren nach Anspruch 1 oder 2,
**dadurch gekennzeichnet, dass** es einen Schritt (E10) der Definition eines Szenarios aufweist, der darin besteht, die Wahrscheinlichkeiten ($k_n$) festzulegen, mit denen eine Anzahl (n) von Stationen ein Paket während des gleichen Auswahlgangs senden möchten, wobei die Stationen "wählbar" genannt werden, und dass der Wert der Dichte-Funktion (h) von den Wahrscheinlichkeiten ($k_n$) abhängt.

4. Auflösungsverfahren nach Anspruch 3, **dadurch gekennzeichnet, dass** der Wert der Dichte-Funktion (h) in der Nähe von 1 um so viel größer ist, als die Wahrscheinlichkeiten ($k_n$) für große Werte der Anzahl (n) nicht vernachlässigbar sind.

5. Auflösungsverfahren nach Anspruch 4, **dadurch gekennzeichnet, dass:**

- eine für die Verteilung der Anzahl der wählbaren Stationen kennzeichnende Funktion (f) definiert wird;

- die Dichte-Funktion (h) derart definiert wird, dass sie mit der Beugung der kennzeichnenden Funktion (f) zunimmt.

6. Auflösungsverfahren nach Anspruch 5, **dadurch gekennzeichnet, dass** die Dichte-Funktion (h) definiert wird durch:

$$h(x) = \sqrt{f''(x)} * \frac{1}{\int_0^1 \sqrt{f''(t)dt}},$$

wobei f" die zweite Ableitung der kennzeichnenden Funktion (f) darstellt.

7. Auflösungsverfahren nach einem der Ansprüche 3 bis 6, **dadurch gekennzeichnet, dass** während des Schritts (E10) der Szenario-Definition die Wahrscheinlichkeiten ($k_n$), mit denen eine Anzahl (n) von Stationen ein Paket während des gleichen Auswahlgangs senden möchten, folgendermaßen festgelegt werden:

$$k_n=1/S$$

für $1 \le n \le S$; und

$$k_n=0$$

für n>S, wobei S die vorgesehene Anzahl von Stationen im Netzwerk ist.

8. Auflösungsverfahren nach einem der Ansprüche 1 bis 7, **dadurch gekennzeichnet, dass** zum Erhalt der Werte $z_j$:

- eine Funktion H folgendermaßen definiert wird:

$$\begin{cases} H(0) = 0 \\ H(i+1) = H(i) + h\left(\frac{i+1/2}{M}\right) \end{cases}$$

wobei M eine Zahl sehr viel größer als m ist,

- und $z_j$ für $0 \le j \le m$ definiert wird durch:

$$\begin{cases} z_0 = 0 \\ z_j = \frac{1}{M} \min\left\{ i / \frac{H(i)}{H(M-1)} \ge \frac{j}{m} \right\} \\ z_m = 1 \end{cases}$$

9. Auflösungsverfahren nach einem der Ansprüche 1 bis 8, **dadurch gekennzeichnet, dass** es bei jedem dieser Auswahlgänge (k) aufweist:

- wenn der gezogene Binärwert (r(k)) gleich einem für eine Sendeautorisierung repräsentativen ersten vorbestimmten Wert (1) ist, einen Schritt (F70) des Sendens eines Signals, das für die Tatsache repräsentativ ist,

dass die Station ein Datenpaket senden möchte; oder
- wenn der gezogene Binärwert (r(k)) gleich einem für ein Sendeverbot repräsentativen zweiten vorbestimmten Wert (0) ist, einen Schritt (F40) des Abhörens des Netzwerks, um zu bestimmen, ob eine andere Station (10', 10") das Signal gesendet hat, und ggf. einen Schritt (F60) des Abbrechens des Auflösungsverfahrens ohne Durchführung der Paketsendung.

**10.** Vorrichtung zur Konfliktauflösung, die in eine Station (10) integriert werden kann, die ein in einem drahtlosen Telekommunikationsnetzwerk zu sendendes Datenpaket hat, wobei die Vorrichtung aufweist:

- Mittel (110), um nach mindestens einem Auswahlgangzu bestimmen, ob die Station autorisiert ist, das Paket zu senden, wobei die Anzahl von Gängen geringer als eine oder gleich einer vorbestimmten maximalen Anzahl ist;
- Mittel (110), die geeignet sind, um bei jedem Auswahlgang (k) einen Wert einer binären Zufallsvariablen (r(k)) zu ziehen, der für eine Autorisierung oder für ein Verbot des Sendens des Pakets während des Gangs (k) repräsentativ ist;

wobei die Vorrichtung (100) **dadurch gekennzeichnet ist, dass** die Mittel , die geeignet sind zu ziehen, dazu geeignet sind, dass die Wahrscheinlichkeit ($p_w$), dass die binäre Zufallsvariable (r(k)) einen vorbestimmten Wert annimmt, unter Berücksichtigung der Autorisierungen und der Verbote des Sendens des Pakets angepasst wird, die von der Station während der vorhergehenden Auswahlgänge (1, ..., k-1) erhalten werden, wobei diese Wahrscheinlichkeiten ($p_w$) in einer für die Vorrichtung zugänglichen Tabelle (150) gespeichert werden.

**11.** Station (10, 10', 10"), die eine Auflösungsvorrichtung (100) nach Anspruch 10 aufweist.

**12.** Computerprogramm, das Anweisungen zur Ausführung der Schritte des Auflösungsverfahrens nach einem der Ansprüche 1 bis 9 aufweist, wenn das Programm von einem Computer ausgeführt wird.

**13.** Computerlesbarer Aufzeichnungsträger, auf dem ein Computerprogramm aufgezeichnet ist, das Anweisungen für die Ausführung der Schritte des Auflösungsverfahrens nach einem der Ansprüche 1 bis 9 aufweist.

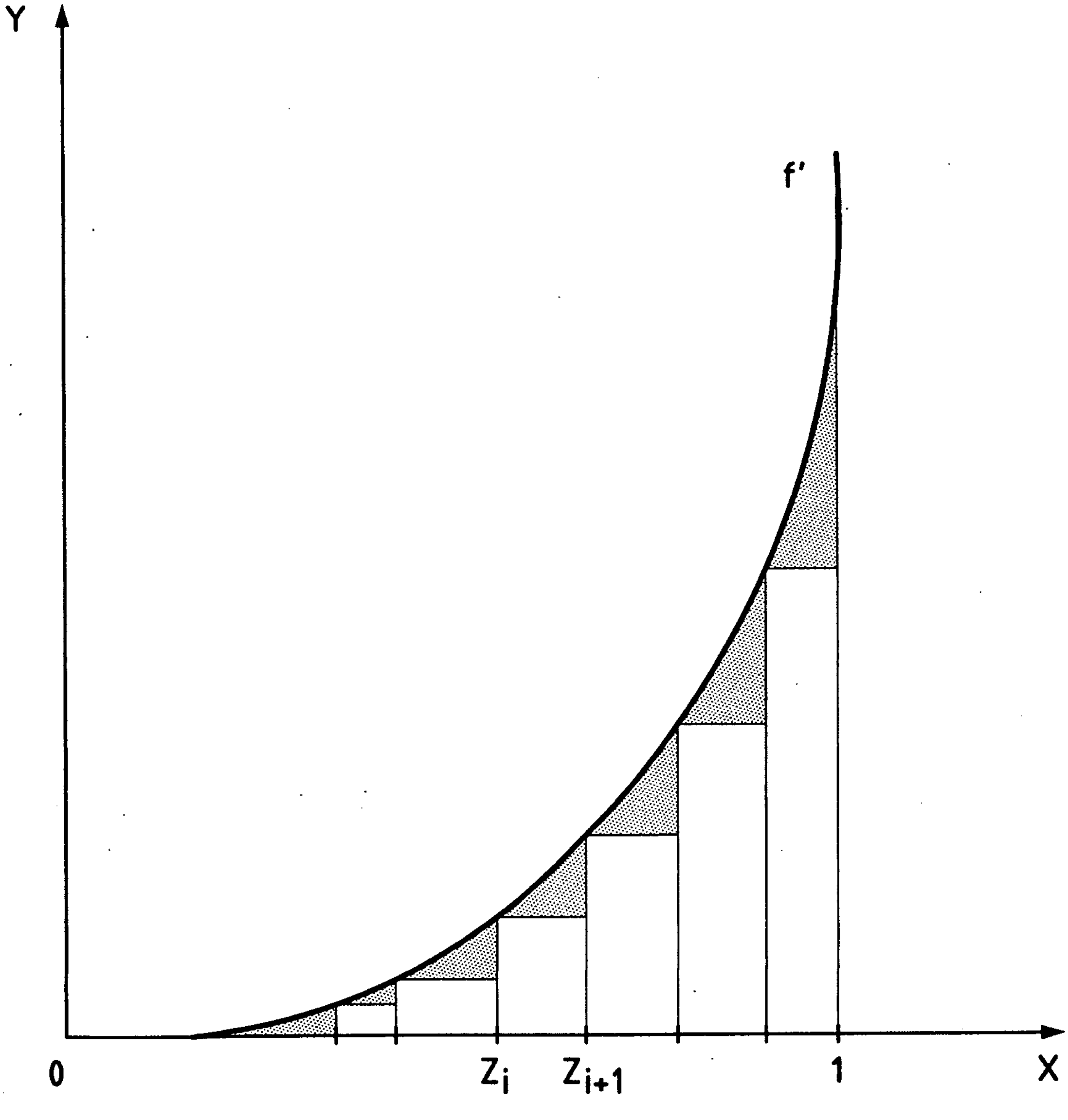


FIG.1

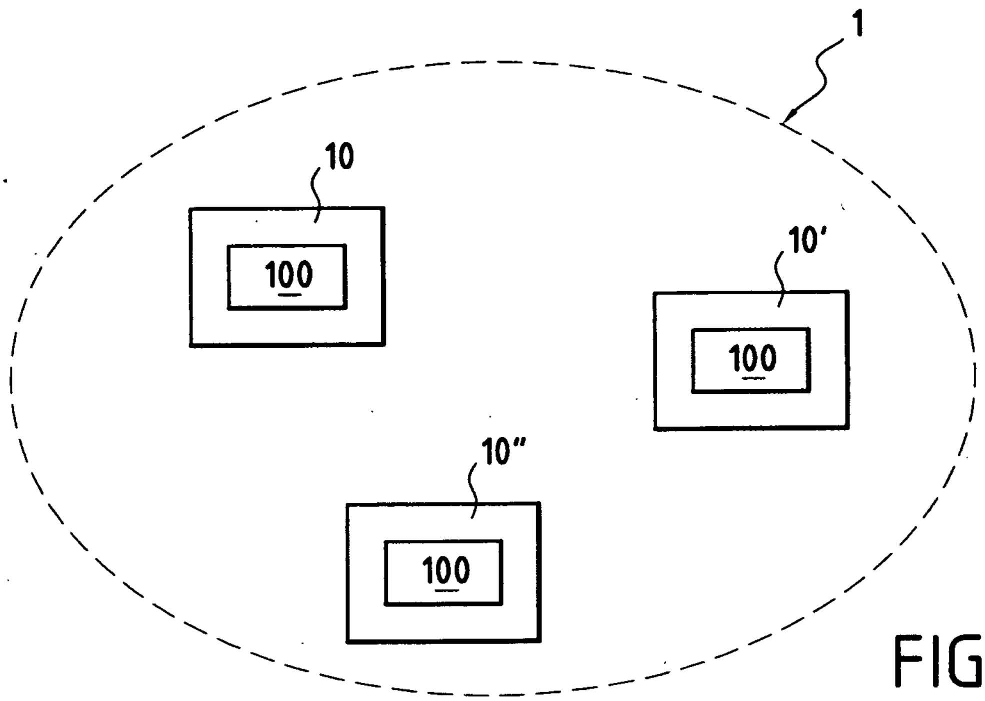


FIG.2

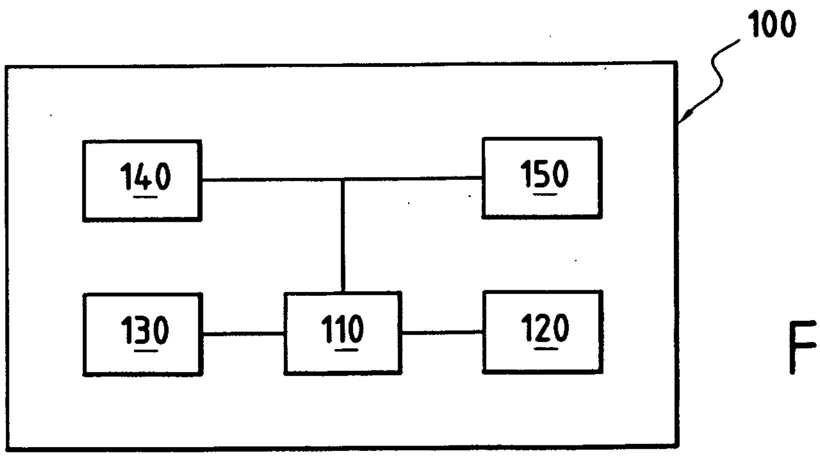


FIG.3

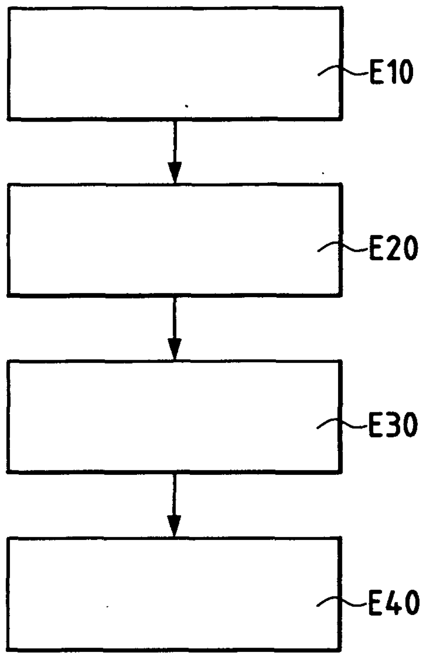
E10
E20
E30
E40

FIG.4

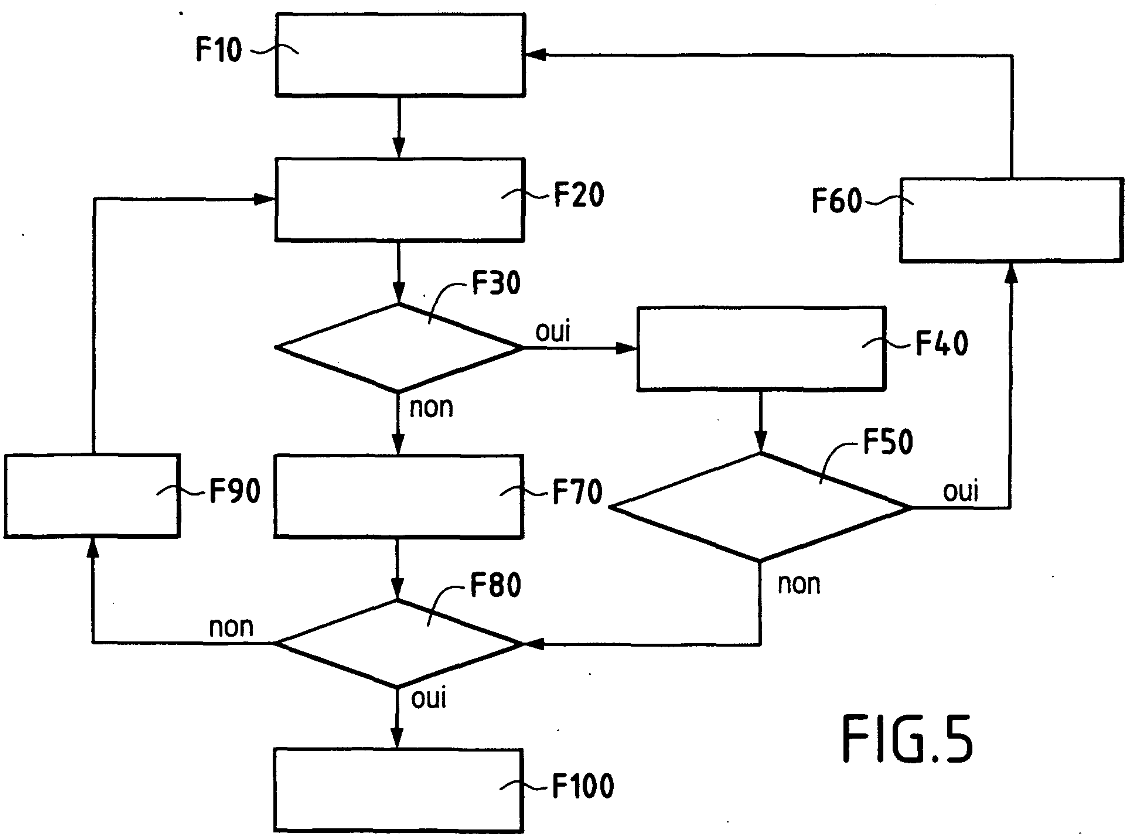
F10
F20
F30
oui
non
F40
F50
oui
non
F60
F70
F80
non
oui
F90
F100

FIG.5

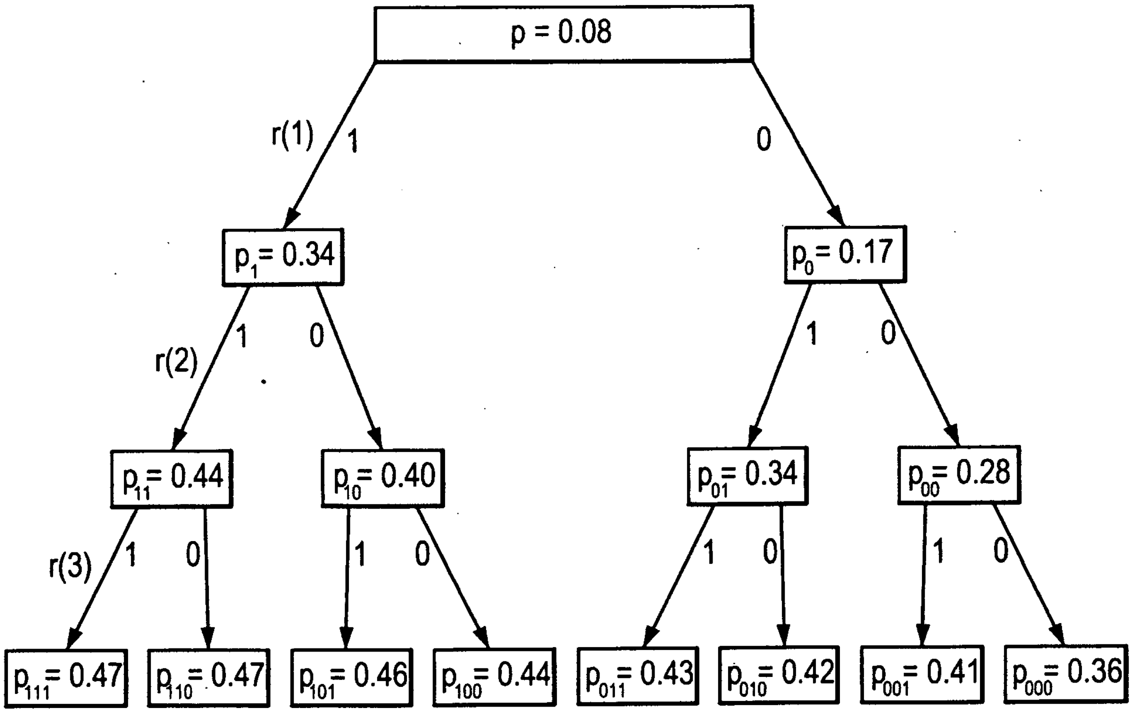
p = 0.08
r(1)
1
0
$p_1$= 0.34
$p_0$= 0.17
r(2)
1
0
1
0
$p_{11}$= 0.44
$p_{10}$= 0.40
$p_{01}$= 0.34
$p_{00}$= 0.28
r(3)
1
0
1
0
1
0
1
0
$p_{111}$= 0.47
$p_{110}$= 0.47
$p_{101}$= 0.46
$p_{100}$= 0.44
$p_{011}$= 0.43
$p_{010}$= 0.42
$p_{001}$= 0.41
$p_{000}$= 0.36

FIG.6

FIG.7

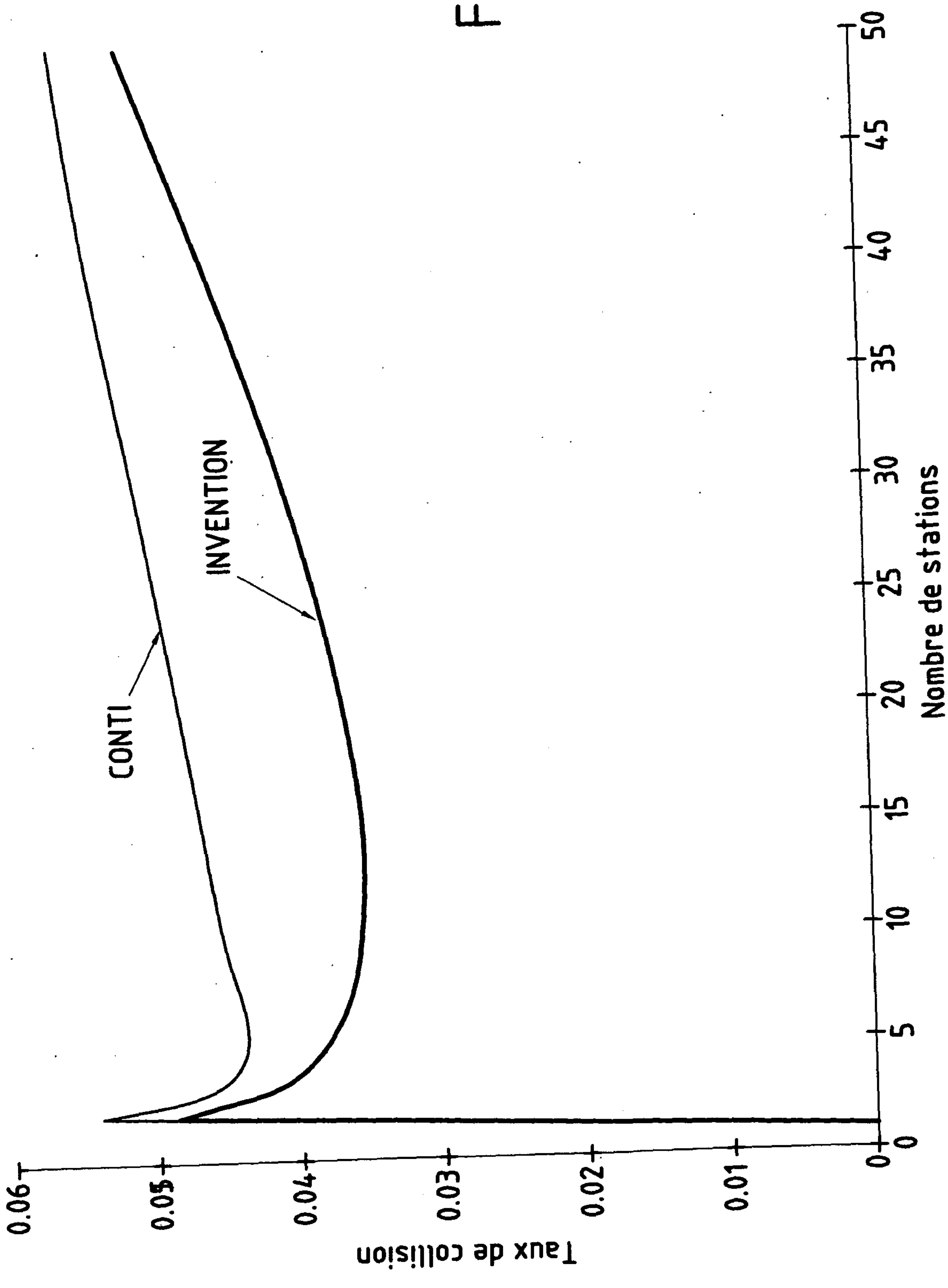
CONTI
INVENTION
Taux de collision
0.06
0.05
0.04
0.03
0.02
0.01
0
Nombre de stations
0
5
10
15
20
25
30
35
40
45
50